Europäisches Patentamt

European Patent Office

Office européen des brevets

(11) Numéro de publication: **0 250 333 B1**

(19)

# FASCICULE DE BREVET EUROPEEN

(12)

(45) Date de publication de fascicule du brevet: **09.09.92**  (51) Int. Cl.⁵: **B60K 20/00**, B60K 37/06

(21) Numéro de dépôt: **87401389.9**

(22) Date de dépôt: **19.06.87**

(54) **Dispositif de commande élctromécanique de boîte de vitesses automatique.**

(30) Priorité: **20.06.86 FR 8608906**

(43) Date de publication de la demande:
**23.12.87 Bulletin 87/52**

(45) Mention de la délivrance du brevet:
**09.09.92 Bulletin 92/37**

(84) Etats contractants désignés:
**BE DE ES GB IT NL SE**

(56) Documents cités:
**EP-A- 0 070 762**
**EP-A- 0 096 352**
**DE-A- 3 146 933**
**FR-A- 2 315 408**
**US-A- 4 448 276**

**AUTOMOTIVE ENGINEER, vol. 5, no. 6, décembre 1980, page 14, Essex, GB; "News scan"**

(73) Titulaire: **REGIE NATIONALE DES USINES RENAULT**
**Boîte postale 103 8-10 avenue Emile Zola**
**F-92109 Boulogne-Billancourt(FR)**

(72) Inventeur: **Leorat, François**
**98, Boulevard de la Reine**
**F-78000 Versailles(FR)**

(74) Mandataire: **Ernst-Schonberg, Michel et al**
**REGIE NATIONALE DES USINES RENAULT (S. 0267) 8 & 10, avenue Emile Zola**
**F-92109 Boulogne Billancourt Cédex(FR)**

Rank Xerox (UK) Business Services

**Description**

La présente invention est relative à un dispositif de commande électro-mécanique de boîte de vitesses automatique de véhicule automobile.

Les véhicules automobiles équipés d'une transmission automatique sont classiquement pourvus d'un levier de sélection qui permet de choisir le mode de fonctionnement de la transmission.

De manière quasi-universelle, ce levier de sélection fait apparaître, pour une transmission usuelle à trois rapports, les positions bien connues suivantes :
- P : position Parking : la transmission est hydrauliquement débrayée, et mécaniquement bloquée de manière positive de façon à disposer d'un frein de parking immobilisant les roues motrices ;
- R : position de Marche Arrière ;
- N : position Neutre : la transmission est hydrauliquement débrayés ;
- A ou D : position de Marche Avant, sur laquelle l'intégralité de l'automatisme de la transmission est disponible ;
- 2 : seuls le premier et le second rapports sont disponibles par l'automatisme, les passages 2 - 3 étant totalement prohibés ;
- 1 : seul le premier rapport est possible, les passages 1 - 2 et 2 - 3 étant totalement prohibés.

Pour les transmissions automatiques à quatre vitesses, une position supplémentaire "3" est généralement introduite, sur laquelle seuls les trois premiers rapports sont disponibles par l'automatisme, les passages 3 - 4 étant totalement prohibés. Les positions "1", "2" et "3" sont couramment dénommées "rapports imposés", indiquant par là qu'ils sont imposés par le conducteur se substituant temporairement aux décisions de l'automatisme.

On voit donc que, selon que l'on a affaire à une transmission automatique à trois ou quatre rapports, le levier de sélection doit présenter six ou sept positions fonctionnelles fondamentales, auxquelles peuvent éventuellement s'ajouter des positions complémentaires correspondant à des fonctions optionnelles.

Pour les transmissions classiques, dont l'automatisme est purement hydraulique, les six ou sept positions du levier de sélection correspondent au même nombre de positions de la vanne manuelle du distributeur hydraulique de la transmission, qui distribue ainsi le fluide de travail dans les circuits hydrauliques spécifiques réalisant les diverses fonctions correspondant aux positions du levier : on est donc contraint d'établir, entre le levier et la vanne manuelle, une liaison mécanique biunivoque précise. De la même manière, on est contraint d'établir cette liaison même dans les transmissions à commande électro-mécanique telles que celle décrite dans la publication FR 2 438 209 dans la mesure où la position "1" met en cause une implication hydraulique.

On connaît les inconvénients constructifs liés à cette liaison mécanique entre levier de sélection et vanne manuelle, en raisons des impératifs contradictoires auxquels elle doit satisfaire : précision de positionnement de la vanne manuelle, limitation de la course totale du levier, découplage des vibrations entre groupe moto-propulseur et levier etc.. De plus, dans la transmission à commande électro-mécanique, la sélection des rapports imposés s'opère le plus souvent par un contacteur à fonctions multiples actionné par le mécanisme lié au sélecteur : selon la rapidité de manoeuvre du sélecteur par le conducteur, les temps de transition d'un contact travaillant à l'autre du contacteur varient considérablement, ce qui conduit à ne transmettre les informations du contacteur au calculateur de contrôle de la transmission qu'avec des précautions importantes de filtrage, qui compliquent le système et obèrent son temps de réponse. De plus, les inconvénients ergonomiques ne sont pas moindres : difficultés ou erreurs de sélection, notamment lors des changements de positions lorsque le véhicule roule et que le conducteur ne peut quitter la route des yeux pour regarder quelle position il enclenche au levier. Pour pallier ces inconvénients, les constructeurs ont recours à des artifices divers, telles que chicanes latérales - ou verticales avec verrou escamotable - visant à particulariser, en compliquant le cheminement, le parcours d'atteinte de la position souhaitée ; ces dispositions sont parfois complétées par des répétiteurs mécaniques et/ou lumineux placés dans une localisation commode pour le regard du conducteur. Cependant, ces palliatifs ne peuvent masquer totalement les inconvénients intrinsèquement attachés à une commande à sélection "en ligne" et à positions nombreuses.

La publication EP 00 70 762 se rapporte à un système de pilotage électro-hydraulique de boîte de vitesses automatique, reposant sur la mise en oeuvre de séquences de commande des électrovannes de la boîte, par des moyens logiques incluant un décodage binaire de signaux. Cette publication mentionne l'utilisation de boutons-poussoirs pour obtenir le rapport désiré, et impose au fonctionnement du système la condition restrictive selon laquelle le nombre d'électrovannes p est supérieur au nombre de rapports n.

Par contre, si l'on considère les transmissions automatiques dont la commande est du type décrit dans la publication FR 2 570 458 on peut tirer avantage du fait que les rapports imposés n'exigent aucuns circuits hydrauliques spécifiques et sont commandés de manière purement électronique ; en effet, dans ces conditions, seuls les trois positions R, N, A ou D du sélecteur sont fonctionnellement à relier à la vanne manuelle, la position P étant hydrauliquement et cinématiquement identique à la position N, et les positions de rapports imposés peuvent faire l'objet d'un traitement à part.

Le but de la présente invention est de tirer parti de l'indépendance fonctionnelle entre les positions P, R, N, D d'une part et les positions de rapports imposés d'autre part, de manière à proposer une solution mécaniquement, électroniquement et géométriquement plus satisfaisante que la solution classique actuelle à commande en ligne.

L'invention concerne un dispositif de commande électromécanique de boîte de vitesses automatique de véhicule automobile comportant un levier de sélection manuel monté sur un pontet lié au plancher du véhicule et relié par une liaison mécanique à une vanne manuelle de distributeur hydraulique de la transmission afin d'assurer les commandes statiques de la transmission, c'est-à-dire le parcage P, la marche arrière R et la position marche avant automatique D, ledit levier de sélection manuel étant associé à une commande de rapports imposés permettant au conducteur d'imposer temporairement l'utilisation des premiers rapports de la transmission, lorsque le levier de sélection est en position D. Ce dispositif est caractérisé en ce que la commande des rapports imposés s'effectue à l'aide d'un système de boutons poussoirs situés à proximité de doigts du conducteur lorsque celui-ci tient le volant, et en ce que ces boutons poussoirs :

- effectuent la demande d'un rapport imposé et annulant éventuellement une autre imposition antérieure de rapport, lors de l'action sur le bouton-poussoir correspondant, et
- annulent la demande d'un rapport imposé lors d'une deuxième action sur le bouton-poussoir correspondant,

l'effet de l'enfoncement de l'un quelconque des boutons-poussoirs étant annulé si le levier du sélecteur (48) quitte la position D.

Selon un mode de réalisation de l'invention, les moyens de commande consistent en autant de circuits qu'il y a de rapports imposés, chaque circuit comportant un interrupteur, un circuit OU et un circuit spécifique dont la sortie est connectée au calculateur de gestion, la sortie de chacun de ces interrupteurs étant connectée au circuit spécifique correspondant et aux entrées des autres circuits OU, chacun des circuits OU recevant également en entrée le signal $\overline{D}$ et étant connecté en sortie au circuit spécifique correspondant, de manière que, chaque fois que le signal $\overline{D}$ est égal à 1, les circuits spécifiques mettent leur sortie à 0, et de façon que, lorsque le signal $\overline{D}$ est égal à 0 et qu'un interrupteur fait apparaître une impulsion, la sortie du circuit OU correspondant à un autre rapport imposé antérieurement passe à 1 et le circuit spécifique correspondant mette sa sortie à 0, le circuit spécifique correspondant à l'interrupteur qui vient d'émettre une impulsion faisant passer sa sortie de la valeur 0 à la valeur 1 ou de la valeur 1 à la valeur 0.

Selon un mode de réalisation de l'invention, chacun des circuits spécifiques comprend en entrée un circuit NI et un certain nombre de circuits ; le signal venant du circuit OU correspondant étant envoyé en entrée de deux circuits NI, la sortie de l'un de ces deux circuits NI étant la sortie du circuit ; les différents circuits NI étant interconnectés de manière que le front montant d'une impulsion sur leintrée du circuit spécifique détermine un nouvel état stable à la sortie de ce circuit lorsque le signal venant du circuit OU est égal à 0, le front descendant de cette impulsion laissant inchangé ce nouvel état stable.

Selon un mode de réalisation de l'invention, chaque sortie d'un circuit spécifique alimente une lampe témoin.

Selon un mode de réalisation de l'invention, le système de boutons-poussoirs est monté sur une console fixée latéralement sur la colonne de direction du côté du siège du passager, chaque bouton-poussoir correspondant respectivement à chaque rapport imposé.

Selon un mode de réalisation de l'invention, la console (2) comprte un vouton-poussoir pour débrayage à l'arrêt.

Selon un mode de réalisation de l'invention, à chaque bouton poussoir est associé un répétiteur lumineux.

Selon un mode de réalisation de l'invention, la console comporte d'autres moyens de commande.

Selon un mode de réalisation de l'invention, le système de boutons-poussiors est monté sur la visière du tableau de bord.

Selon un mode de réalisation de l'invention, les boutone-poussoirs possèdent un voyant lumineux intégré.

Le dispositif de commande électo-mécanique selon l'invention présente ainsi l'avantage de dissocier les commandes dynamiques des commandes statiques de la boîte de vitesses automatique, les commandes dynamiques était disposées à portée des doigts du conducteur de manière que celui-ci n'ait pas à lacher le

3

volant.

L'invention sera mieux comprise grâce à la description d'un mode de réalisation particulier décrit à titre nullement limitatif et illustré par les dessins annexés, parmi lesquels :

- la figure 1 décrit symboliquement la commande manuelle associée à l'invention ;
- la figure 2 montre un premier mode d'implantation de l'invention ;
- les figures 3 et 4 montrent un mode de réalisation du circuit de traitement, selon l'invention, des signaux issus des touches de sélection des rapports imposés ;
- la figure 5 montre un autre mode d'implantation de l'invention.

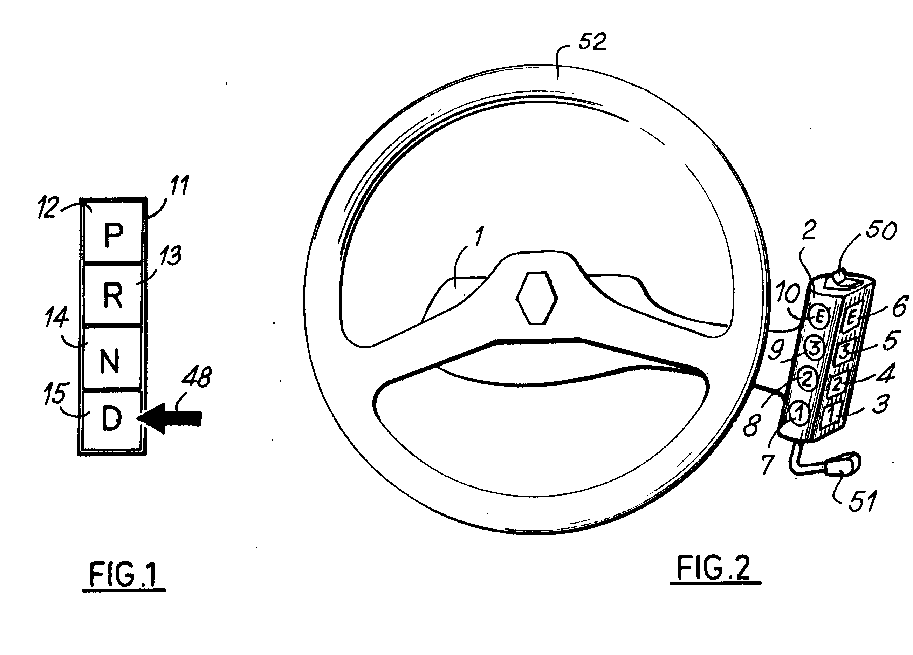

Tels qu'ils sont représentés sur la figure 2, les éléments du dispositif selon l'invention comprennent une console 2 fixée latéralement sur la colonne de direction 1 (de manière exclusive, à droite pour un véhicule à direction à gauche, à gauche pour un véhicule à direction à droite), de telle manière que les boutons-poussoirs 3, 4, 5 et 6 soient accessibles du bout des doigts sans que le pouce ait à lacher la jante 52 du volant. Les boutons-poussoirs 3, 4 et 5 correspondent respectivement aux rapports imposes "1", "2" et "3", tandis que le bouton-poussoir 6 correspond, de manière non limitative, à une fonction complémentaire, telle que par exemple le débrayage à l'arrêt décrit dans la publication FR 2 543 242. La console 2 peut avantageusement être équipée de voyants lumineux répétiteur tels que 7, 8, 9 et 10 correspondant respectivement aux boutons-poussoirs 3, 4, 5 et 6, et supporter également d'autres moyens de commande 50 ou 51 se rapportant ou non au contrôle de la transmission automatique. La console 2 regroupe ainsi tous les moyens de commande dynamiques de la transmission automatique.

Par ailleurs, le véhicule dispose d'une commande manuelle (figure 1) montée, d'une manière connue en soi, sur un pontet lié au plancher du véhicule et figurée symboliquement par 11 ; cette commande est particulière dans la mesure où elle ne regroupe que les commandes à caractère statique de la transmission, à savoir les positions P référencée 12, R référencée 13, N référancée 14 et D référencée 15.

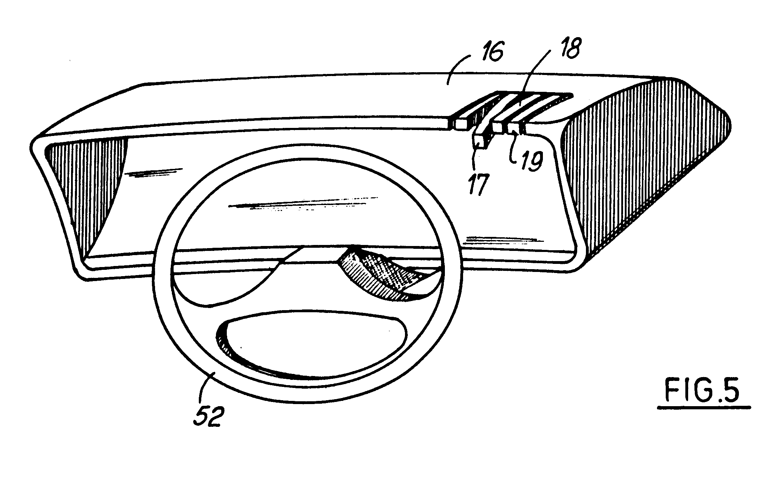

Selon l'autre mode de réalisation décrit par la figure 5, le dispositif selon l'invention comporte toujours la commande manuelle telle que décrite ci-dessus. Par contre, des touches basculantes avec voyants lumineux intégrés correspondant aux rapports imposés 17, 18 et 19 sont implantées dans l'épaisseur de la visière 16 du tableau de bord, toujours de telle manière que ces touches basculantes soient accessibles du bout des doigts sans que le pouce ait à lacher la jante 52 du volant.

Ces deux modes de réalisation ne sont nullement exclusifs, et toute autre réalisation séparant les commandes statiques centralisées sur 11 des commandes dynamiques, de telle manière que ces dernière restent accessibles du bout des doigts depuis le volant, relève du principe de l'invention.

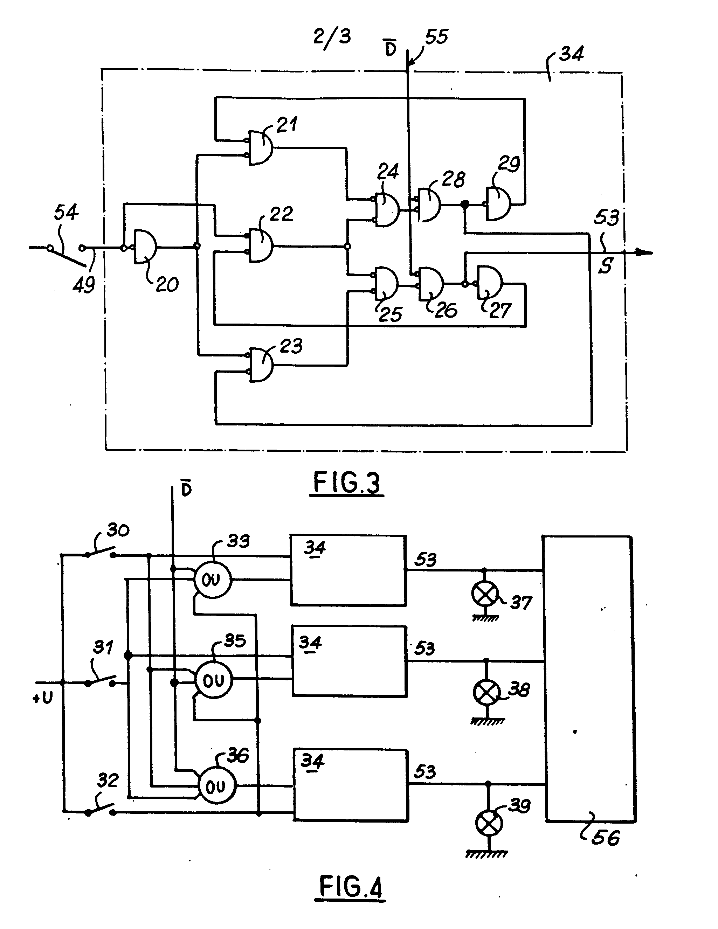

Fonctionnellement, qu'elle que soit la manière dont est implanté le dispositif selon l'invention, l'enfoncement de l'une des touches 1, 2 ou 3, doit annuler l'effet d'un enfoncement antérieur d'une autre des ces touches et imposer le rapport correspondant. Par ailleurs, dès que le levier de sélection, symbolisé par 48 sur la figure 1, quitte la position D, l'effet de l'enfoncement antérieur de l'une quelconque des touches 1, 2 ou 3 est annulé. Pour ce faire, on fait appel à un circuit logique séquentiel spécifique symbolisé sur la figure 3. La fonction de ce circuit spécifique, que l'on référancera circuit 34, est de faire apparaître sur sa sortie S référencée 53 un signal qui passe de la valeur 1 (ou de la valeur 0) à la valeur 0 (à la valeur 1) à chaque fois qu'une impulsion (dont la génération est symbolisée par le contacteur 54) apparaît sur son entrée 49, la sortie 53 restant toujours à la valeur 0 si l'entrée $\overline{D}$ référencée 55 est à 1, l'information D correspondant au fait que le sélecteur 48 est sur la position D ($\overline{D}$ correspondant au fait que le sélecteur est sur l'une des positions P, R, ou N). Pour décrire commodément le fonctionnement de ce circuit, on va partie d'un état de ce système où S = 1 et $\overline{D}$ = 0, aucune umpulsion n'étant par ailleurs appliquée par le contacteur 54 sur l'entrée 49 du circuit NI 20 qui vaut donc 0, ainsi que la première entrée du circuit NI 22. La sortie de NI 20 vaut 1, et elle est reportée sur les première entrée du circuit NI 21 et NI 23, dont les sorties valent par conséquent 0. Comme S = 1 la sortie du circuit NI 27, qui est aussi l'entrée du circuit NI 22, vaut 0. Les deux entrées du circuit NI 22 étant nulles, sa sortie vaut 1, ce qui entraîne que les sorties des circuits NI 24 et NI 25 sont nulles. Les deux entrées des circuits NI 26 et NI 28 étant nulles, la sortie de chacun de ces deux derniers circuits vaut 1. On vérifie ainsi que l'état défini par S = 1, $\overline{D}$ = 0 est stable.

Si l'on considère le front montant d'une impulsion sur l'entrée 49 du circuit NI 20 par une fermeture momentanée du contacteur 54, la sortie du circuit NI 20 passe à 0, ainsi que la sortie du circuit NI 22. Les deux entrées du circuit NI 21 passant à 0, la sortie de ce dernier circuit passe à 1, ce qui entraîne que la sortie du circuit NI 24 et la sortie du circuit NI 29 restent à 0, de même que la sortie du circuit NI 28 demeure à 1. Les deux entrées du circuit NI 25 passant à 0, la sortie de ce dernier circuit passe à 1, si bien que la sortie du circuit NI 26 passe à 0 ; ils en résulte que le signal S, qui est la sortie du circuit NI 26, commute à 0.

On vient donc de voir, qu'à partir d'un état stable défini par S = 1 (avec $\overline{D}$ = 0), le front montant d'une impulsion sur le contacteur 54 détermine un nouvel état stable défini par S = 0, ($\overline{D}$ = 0) ; et on montrerait

4

de même cet état stable n'est pas perturbé par le front descendant de cette même impulsion. On pourraît montrer d'une manière analogue que, à partie de l'état stable défini par S = 0 (avec $\overline{D}$ = 0), une nouvelle impulsion émise par le calculateur 54 restaure l'état stable défini par S = 1, (avec $\overline{D}$ = 0).

Par ailleurs, on montrerait également de la même façon que, l'un ou l'autre état stable

$$\{S = 0, \overline{D} = 0\}, \text{ ou } \{S = 1, \overline{D} = 0\}$$

ayant été atteint sur le front montant d'une impulsion générée par le contacteur 54, le front descendant de cette impulsion laisse inchangés ces états stables.

Enfin, si $\overline{D}$ = 1, ce qui signifie que le levier de sélection est sur une position autre que D, l'entrée 1 ainsi imposée sur les circuits NI 28 et NI 26 force leur sortie à 0, ce qui impose au reste de l'ensemble du circuit 34 de prendre l'état stable correspondant à S = 0, sur front descendant d'impulsion ; si $\overline{D}$ = 1 disparaît, l'état S = 0 persiste jusqu'à l'apparition d'une nouvelle impulsion sur l'entrée 49.

Comme indiqué précédemment, des circuits 34 sont insérés dans le circuit complet représenté sur la figure 4, qui décrit in extenso une réalisation de l'invention pour une transmission à trois rapports imposés ; l'homme du métier généraliserait sans difficultés, à partir de ce schéma, la réalisation de l'invention au cas d'une transmission à un nombre quelconque de rapports imposés.

Les trois touches de commande d'imposition des rapports actionnent chacune un interrupteur référencé 30, 31, et 32 correspondant respectivement aux rapports imposés "1", "2" et "3", et la sortie de chacun de ces interrupteurs est connectée :

- à un circuit spécifique 34,
- aux entrées de deux circuits OU référencés 35 et 36 pour l'interrupteur 30, de deux circuits OU référencés 33 et 36 pour l'interrupteur 31, et aux entrées de deux circuits OU référencés 33 et 35 pour l'interrupteur 32.

Chacun des circuits OU 33, OU 35 et OU 36 reçoit également en entrée le signal $\overline{D}$, et leurs sorties respectives sont connectées au circuit 34 correspondant, en lieu et place de l'entrée $\overline{D}$ sur le schéma de la figure 3. Enfin, les circuits spécifiques 34 alimentent, par leur sortie, une lampe témoin 37, 38, et 39 correspondant respectivement aux rapports imposés sélectionnés, et le calculateur 56 de gestion de la transmission automatique.

A chaque fois que le signal $\overline{D}$ apparaît, les circuits 34 mettent leur sortie à 0 comme vu précédemment : toute imposition de rapports est donc annulée dès que le levier de sélection 48 quitte la position D.

Dès qu'un interrupteur 30, 31, 32 fait apparaître une impulsion, les signaux sur les sorties des deux circuits OU qui lui sont connectés ont le même effet que le signal $\overline{D}$, si bein que :

- la demande d'un rapport imposé annule une autre imposition antérieure de rapport ;
- on peut annuler la demande d'un rapport imposé en réappuyant sur la touche actionnant l'interrupteur correspondant.

**Revendications**

1. Dispositif de commande électromécanique de boîte de vitesses automatique de véhicule automobile comportant un levier de sélection manuel monté sur un pontet lié au plancher du véhicule et relié par une liaison mécanique à une vanne manuelle de distributeur hydraulique de la transmission afin d'assurer les commandes statiques de la transmission, c'est-à-dire le parcage P, la marche arrière R et la position marche avant automatique D, ledit levier de sélection manuel étant associé à une commande de rapports imposés permettant au conducteur d'imposer temporairement l'utilisation des premiers rapports de la transmission, lorsque le levier de sélection est en position D, caractérisé en ce que la commande des rapports imposés s'effectue à l'aide d'un système de boutons poussoirs (3, 4, 5, 6, 17, 18, 19) situés à proximité de doigts du conducteur lorsque celui-ci tient le volant, et en ce que ces boutons poussoirs (3, 4, 5, 6, 17, 18, 19):

   - effectuent la demande d'un rapport imposé et annulant éventuellement une autre imposition antérieure de rapport, lors de l'action sur le bouton-poussoir correspondant, et
   - annulent la demande d'un rapport imposé lors d'une deuxième action sur le bouton-poussoir correspondant,

   l'effet de l'enfoncement de l'un quelconque des boutons-poussoirs étant annulé si le levier du sélecteur (48) quitte la position D.

2. Dispositif de commande selon la revendication 1, caractérisé en ce que les moyens de commande consistent en autant de circuits qu'il y a de rapports imposés, chaque circuit comportant un interrupteur (30, 31, 32), un circuit OU (33, 35, 36) et un circuit (34) dont la sortie est connectée au calculateur de gestion (56) ; la sortie de chacun de ces interrupteurs (30, 31, 32) étant connectée au circuit (34) correspondant et aux entrées des autres circuits OU (35 et 36 pour 30, 33 et 36 pour 31, 33 et 35 pour 32) ; chacun des circuits OU recevant également en entrée le signal $\overline{D}$ et étant connecté en sortie au circuit (34) correspondant, de manière que chaque fois que le signal $\overline{D}$ est égal à 1, les circuits (34) mettent leur sortie S à 0 ; et de façon que lorsque le signal $\overline{D}$ est égal à 0 et qu'un interrupteur (30, 31, 32) fait apparaître une impulsion, la sortie du circuit OU correspondant à un autre rapport imposé antérieurement passe à 1 et le circuit (34) correspondant mette sa sortie S à 0, le circuit (34) correspondant à l'interrupteur (30, 31, 32) qui vient d'avoir une impulsion faisant passer sa sortie S de la valeur 0 à la valeur 1 ou de la valeur 1 à la valeur 0.

3. Dispositif de commande selon la revendication 2, caractérisé en ce que chacun des circuits (34) comprend en entrée un circuit NI 20 et des circuits NI 21, NI 22, NI 23, NI 24, NI 25, NI 26, NI 27, NI 28, NI 29 ; le signal venant du circuit OU correspondant (33, 35, 36) étant envoyé en entrée des circuits NI 26 et NI 28, la sortie NI 26 étant la sortie S du circuit (34) ; les différents circuits NI étant interconnectés de manière que le front montant d'une impulsion sur l'entrée du circuit (34) détermine on nouvel état stable à la sortie S lorsque le signal venant du circuit OU est égal à 0, le front descendant de cette impulsion laissant inchangé ce nouvel état stable.

4. Dispositif de commande selon la revendication 2, caractérisé en ce que chaque sortie d'un circuit (34) alimente une lampe-témoin (37, 38, 39).

5. Dispositif de commande selon la revendication 1, caractérisé en ce que le système de boutons-poussoirs (3, 4, 5, 6) est monté sur une console (2) fixée latéralement sur la colonne de direction (1) du côté du siège du passager, chaque bouton-poussoir (3, 4, 5) correspondant respectivement aux rapports imposés.

6. Dispositif de commande selon la revendication 5, caractérisé en ce que la console (2) comporte un bouton-poussoir (6) pour débrayage à l'arrêt.

7. Dispositif de commande selon la revendication 5 et 6, caractérisé en ce qu'à chaque bouton-poussoir (3, 4, 5, 6) est associé un répétiteur lumineux (7, 8, 9, 10).

8. Dispositif de commande selon la revendication 5, caractérisé en ce que la console (2) comporte d'autres moyens de commande (50) et/ou (52).

9. Dispositif de commande selon la revendication 1, caractérisé en ce que le système de boutons-poussoirs (17, 18, 19) est monté sur une visière (16).

10. Dispositif de commande selon la revendication 9, caractérisé en ce que les boutons-poussoirs (17, 18, 19) possèdent un voyant lumineux intégré.

**Claims**

1. An electromechanical control device for an automatic transmission of a motor vehicle comprising a manual selection lever disposed on a support connected to the floor of the vehicle and linked by a mechanical connection to a manual valve of the hydraulic distributor of the transmission so as to provide for the static controls of the transmission, i.e. parking P, reverse drive R and automatic forward drive D, the manual selection lever being associated with a set ratio control allowing the driver temporarily to set the use of the initial ratios of the transmission, when the selection lever is in the position D, characterized in that the set ratio control takes place by means of a system of push buttons (3, 4, 5, 6, 17, 18, 19) disposed in the vicinity of the driver's fingers when the latter is holding the steering wheel and in that these push buttons (3, 4, 5, 6, 17, 18, 19):
    - implement the request for a set ratio, possibly cancelling out a different prior ratio setting during actuation of the corresponding push button, and
    - cancel out the request for a set ratio when the corresponding push button is actuated for a second time,

6

the effect of depressing any one of the push buttons being cancelled out if the selector lever (48) leaves position D.

2. A control device as claimed in claim 1, characterized in that the control means comprise as many circuits as there are set ratios, each circuit comprising a switch (30, 31, 32), an OR circuit (33, 35, 36) and a circuit (34) whose output is connected to the control computer (56), the output of each of these switches (30, 31, 32) being connected to the corresponding circuit (34) and to the inputs of the other OR circuits (35 and 36 for 30, 33 and 36 for 31, 33 and 35 for 32), each of these OR circuits also receiving as input the signal $\overline{D}$ and being connected as output to the corresponding circuit (34) so that whenever the signal $\overline{D}$ is 1 the circuits (34) set their output S to 0 and so that when the signal $\overline{D}$ is 0 and a switch (30, 31, 32) causes a pulse to appear, the output of the OR circuit corresponding to another previously set ratio moves to 1 and the corresponding circuit (34) sets its output S to 0, the circuit (34) corresponding to the switch (30, 31, 32) which has just received a pulse causing its output S to move from the value 0 to the value 1 or from the value 1 to the value 0.

3. A control device as claimed in claim 2, characterized in that each of the circuits (34) comprises as input a NOR circuit 20 and NOR circuits 21, 22, 23, 24, 25, 26, 27, 28, 29, the signal from the corresponding OR circuit (33, 35, 36) being supplied as input to the NOR circuits 26 and 28, the output of NOR 26 being the output S of the circuit (34), the various NOR circuits being interconnected in such a way that the leading edge of a pulse at the input of the circuit (34) determines a new stable state at the output S when the signal from the OR circuit is equal to 0, the trailing edge of this pulse leaving this new stable state unchanged.

4. A control device as claimed in claim 2, characterized in that each output of a circuit (34) supplies an indicator lamp (37, 38, 39).

5. A control device as claimed in claim 1, characterized in that the system of push buttons (3, 4, 5, 6) is mounted on a console (2) fastened laterally to the steering column (1) on the passenger seat side, each push button (3, 4, 5) corresponding respectively to the set ratios.

6. A control device as claimed in claim 5, characterized in that the console (2) comprises a push button (6) for disengagement on stopping.

7. A control device as claimed in claim 5 and 6, characterized in that each push button (3, 4, 5, 6) is associated with a light repeater (7, 8, 9, 10).

8. A control device as claimed in claim 5, characterized in that the console (2) comprises other control means (50 and/or 52).

9. A control device as claimed in claim 1, characterized in that the system of push buttons (17, 18, 19) is disposed on a panel (16).

10. A control device as claimed in claim 9, characterized in that the push buttons (17, 18, 19) have an integrated light indicator.

**Patentansprüche**

1. Elektromechanische Steuerungseinrichtung für automatische Getriebe von Kraftfahrzeugen, mit einem manuellen Wählhebel, der an einem Träger befestigt ist, welcher am Fahrzeugboden angeordnet ist und der über eine mechanische Verbindung mit einem manuellen Ventil zur hydraulischen Verteilung der Kraftübertragung verbunden ist, um die statischen Befehle zur Kraftübertragung zu übertragen, d.h. für das Parken P, das Rückwärtsfahren R und das automatische Vorwärtsfahren D, wobei der manuelle Wählhebel mit einer übergeordneten Gangsteuerung verbunden ist, die es dem Fahrer erlaubt, zeitweilig die ersten Gänge der Kraftübertragung zu verwenden, sofern sich der Wählhebel in D-Stellung befindet, dadurch gekennzeichnet, daß die übergeordnete Gangsteuerung mittels einer Anordnung von Druckschaltern (3, 4, 5, 6, 17, 18, 19) erfolgt, die in der Nähe der Finger des Fahrers angeordnet sind, wenn dieser das Lenkrad festhält und daß die Druckschalter (3, 4, 5, 6, 17, 18, 19):
   - die Auswahl eines übergeordneten Ganges bewirken und gegebenenfalls die vorherige Auswahl

7

eines anderen Ganges bei Betätigung des entsprechenden Druckschalters annulieren,

- die Auswahl eines übergeordneten Ganges annulieren bei einer zweiten Betätigung des entsprechenden Druckschalters,

wobei die durch das Eindrücken eines jeden Druckschalters hervorgerufene Wirkung annuliert wird, wenn der Wählhebel (48) die D-Stellung verläßt.

2. Steuerungseinrichtung nach Anspruch 1, dadurch gekennzeichnet, daß die Steuerungsanordnung aus so viel Schaltkreisen besteht wie übergeordnete Gänge vorhanden sind, wobei jeder Schaltkreis einen Schalter (30, 31, 32), eine ODER-Schaltung (33, 35, 36) und eine Schaltung (34) aufweist, deren Ausgang mit einem Steuerrechner (56) verbunden ist; der Ausgang eines jeden Schalters (30, 31, 32) ist mit der zugehörigen Schaltung (34) und den Eingängen der anderen ODER-Schaltungen (35 und 36 für 30, 33 und 36 für 31, 33 und 35 für 32) verbunden; jede ODER-Schaltung erhält zugleich an ihrem Eingang das Signal $\overline{D}$, wobei ihr Ausgang mit der zugehörigen Schaltung (34) derart verbunden ist, daß jedes Mal, wenn das Signal $\overline{D} = 1$ ist, die Schaltungen (34) ihre Ausgänge S auf Null setzen; und derart, daß, wenn das Signal $\overline{D} = 0$ ist und einer der Schalter (30, 31, 32) einen Impuls erzeugt, der Ausgang des ODER-Schaltung.der zu einem anderen vorher ausgewählten Gang gehört, auf 1 gestellt wird, wobei die zugehörige Schaltung (34) ihren Ausgang S auf 0 stellt und die zum Schalter (30, 31, 32) gehörende Schaltung (34), die einen Impuls erhält, ihren Ausgang S vom Wert 0 auf den Wert 1 stellt oder vom Wert 1 auf den Wert 0 stellt.

3. Steuerungseinrichtung nach Anspruch 2, dadurch gekennzeichnet, daß jede der Schaltungen (34) am Eingang einen Schaltkreis NI 20 sowie Schaltkreise NI 21, NI 22, NI 23, NI 24, NI 25, NI 26, NI 27, NI 28, NI 29 aufweist; das von der zugehörigen ODER-Schaltung (33, 35, 36) stammende Signal wird dem Eingang der Schaltkreise NI 26 und NI 28 zugeführt, wobei der Ausgang NI 26 der Ausgang S der Schaltung (34) ist; die verschiedenen Schaltkreise NI sind derart miteinander verbunden, daß die Anstiegsflanke eines Impulses am Eingang der Schaltung (34) einen neuen stabilen Zustand am Ausgang S festlegt, wenn das von der ODER-Schaltung kommende Signal gleich 0 ist, wobei die Abstiegsflanke dieses Impulses diesen neuen stabilen Zustand unverändert läßt.

4. Steuerungseinrichtung nach Anspruch 2, dadurch gekennzeichnet, daß jeder Ausgang einer Schaltung (34) eine Warnlampe (37, 38, 39) versorgt.

5. Steuerungseinrichtung nach Anspruch 1, dadurch gekennzeichnet, daß die Anordnung aus Druckschaltern (3, 4, 5, 6) auf einer Konsole (2) angeordnet ist, die seitlich von der Lenksäule (1) vorgesehen ist, und zwar auf der Seite des Beifahrers, wobei jeder Druckschalter (3, 4, 5) einem der übergeordneten Gänge entspricht.

6. Steuerungseinrichtung nach Anspruch 5, dadurch gekennzeichnet, daß die Konsole (2) einen Druckschalter (6) für das Auskuppeln beim Halten aufweist.

7. Steuerungseinrichtung nach Anspruch 5 oder 6, dadurch gekennzeichnet, daß jedem Druckschalter (3, 4, 5, 6) ein Lichtwiederholer (7, 8, 9, 10) zugeordnet ist.

8. Steuerungseinrichtung nach Anspruch 5, dadurch gekennzeichnet, daß die Konsole (2) andere Steuerungsanordnungen (50 und/oder 52) aufweist.

9. Steuerungseinrichtung nach Anspruch 1, dadurch gekennzeichnet, daß die Anordnung von Druckschaltern (17, 18, 19) auf der Instrumentenbrettablage (16) angeordnet ist.

10. Steuerungseinrichtung nach Anspruch 9, dadurch gekennzeichnet, daß die Druckschalter (17, 18, 19) eine integrierte Lichtanzeige aufweisen.

FIG.1

FIG.2

EP 0 250 333 B1

FIG.3

FIG.4

10

FIG.5

EP 0 250 333 B1